# FASCICULE DE BREVET EUROPEEN

(11) **EP 4 103 837 B1**
(45) Date de publication et mention de la délivrance du brevet: **07.02.2024**
(21) Numéro de dépôt: 20829911.5
(22) Date de dépôt: 17.12.2020
(51) Int. Cl.: F04B 15/06, F04B 15/08, F04B 37/18, F04B 37/20, F17C 5/06, F17C 9/02, F17C 9/04

(54) **DISPOSITIF DE COMPRESSION, INSTALLATION, STATION DE REMPLISSAGE ET PROCÉDÉ UTILISANT UN TEL DISPOSITIF**
KOMPRESSIONSVORRICHTUNG, ANLAGE, FÜLLSTATION UND VERFAHREN MIT EINER SOLCHEN VORRICHTUNG
COMPRESSION DEVICE, INSTALLATION, FILLING STATION AND METHOD USING SUCH A DEVICE

(30) Priorité: 12.02.2020 FR 2001365
(43) Date de publication de la demande: 21.12.2022
(73) Titulaire: L'Air Liquide, Société Anonyme pour l'Etude et l'Exploitation des Procédés Georges Claude, 75007 Paris (FR)
(72) Inventeur: PENNEC, Yann, 38360 SASSENAGE (FR); TRY, Rasmey, 38360 SASSENAGE (FR)
(74) Mandataire: Air Liquide
(86) Numéro de dépôt international: PCT/EP2020/086609
(87) Numéro de publication internationale: WO 2021/160326

(56) Documents cités:
- EP-A1- 3 414 498
- DE-C1- 19 716 414
- FR-A1- 2 904 401
- GB-A- 712 340

## Description

L'invention concerne un dispositif de compression, une installation, une station de remplissage et procédé utilisant un tel dispositif.

L'invention concerne plus particulièrement un dispositif de compression d'un fluide comportant une chambre de compression comprenant un piston mobile, le dispositif comprenant une première extrémité abritant une première extrémité de la chambre de compression, le dispositif comprenant une seconde extrémité abritant une seconde extrémité de la chambre de compression, le piston étant mobile en translation entre les première et seconde extrémités de la chambre de compression, le dispositif comprenant une conduite de régénération reliant les première et seconde extrémités de la chambre de compression et comportant un régénérateur, le dispositif comprenant une conduite d'alimentation comprenant une extrémité amont destinée à être reliée à une source de fluide à comprimer et une extrémité aval débouchant dans la première extrémité de la chambre de compression, la conduite d'alimentation comprenant un ensemble de clapet(s), le dispositif comprenant une conduite d'évacuation du fluide comprimé comprenant une extrémité amont reliée à la chambre de compression et une extrémité aval destinée à être reliée à un récepteur du fluide comprimé, la conduite d'évacuation comprenant un ensemble de clapet(s).

Le document FR2904401A1 décrit un tel dispositif de compression parfois appelé « compresseur thermique ». Ce dispositif est satisfaisant mais est exigeant en ce qui concerne sa fabrication ou sa maintenance. En effet, l'étanchéité du piston de pré-compression et sa commande sont relativement complexes et coûteux à mettre en oeuvre. De plus, le gaz compressé sortant a des conditions thermodynamiques (température notamment) qui rendent difficile l'agencement de plusieurs étages de compression en série.

Un but de la présente invention est de pallier tout ou partie des inconvénients de l'art antérieur relevés ci-dessus.

A cette fin, le dispositif selon l'invention est tel que défini dans la revendication 1.

Par ailleurs, des modes de réalisation de l'invention peuvent comporter l'une ou plusieurs des caractéristiques suivantes :
- l'extrémité amont de la conduite d'évacuation du fluide comprimé est reliée à la première extrémité de la chambre de compression,
- l'ensemble de clapet(s) de la conduite (8) d'alimentation comprend un organe anti-retour tel qu'un clapet anti-retour,
- l'ensemble de clapet(s) de la conduite d'évacuation comprend un organe anti-retour tel qu'un clapet anti-retour,
- la seconde extrémité du dispositif comprend un système de réchauffage,
- la première extrémité du dispositif comprend un système de refroidissement ou de réchauffage,
- le régénérateur comprend un tube échangeur de chaleur, notamment un tube cylindrique, rempli d'un matériau configuré pour emmagasiner et restituer la chaleur et laisser passer le fluide à l'état liquide et/ou gazeux,
- le fluide est choisi dans la liste comprenant He, H2, Ne, CO, Ar, N2, 02, CH4, CO2, NO, Kr, Xe ou tout mélange de deux ou plus de ces espèces chimiques.

L'invention concerne également une installation de compression comprenant plusieurs dispositifs de compression conformes à l'une quelconque des caractéristiques ci-dessus ou ci-dessous.

L'invention concerne également une station de remplissage de réservoir de gaz sous pression comprenant une source de gaz liquéfié, un circuit de transfert de fluide depuis la source vers une extrémité de distribution, le circuit de transfert comprenant un dispositif de compression conforme à l'une quelconque des caractéristiques ci-dessus ou ci-dessous ou une installation de compression précitée.

Selon d'autres particularités possibles :
- le circuit de transfert comprend au moins un stockage de gaz sous pression comprimé par le dispositif de compression, ledit stockage étant disposé entre le dispositif de compression et l'extrémité de distribution,
- le circuit de transfert comprend une pompe disposée entre la source de gaz liquéfié et le dispositif de compression L'invention concerne également un procédé de compression de fluide au moyen d'un dispositif conforme à l'une quelconque des caractéristiques ci-dessus ou ci-dessous ou d'une installation précitée, le procédé comprenant les étapes successives suivantes : a) admission d'un fluide à l'état liquide ou gazeux à une pression initiale dans la première extrémité de la chambre de compression via la conduite d'alimentation, b) déplacement du piston vers la première extrémité de la chambre de compression et transfert du fluide de la première extrémité de la chambre de compression vers la seconde extrémité de la chambre de compression via la conduite de régénération, la seconde extrémité du dispositif étant maintenue à une température supérieure à la température de la première extrémité, c) déplacement du piston vers la seconde extrémité de la chambre de compression et transfert du fluide de la seconde extrémité de la chambre de compression vers la première extrémité de la chambre de compression et l'extrémité aval de la conduite d'évacuation. Selon une particularité possible le fluide peut être comprimé à un débit de 10 à 100 grammes par seconde, notamment 50 grammes par seconde.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue en coupe, schématique et partielle illustrant un exemple de structure et fonctionnement d'un exemple de réalisation d'un dispositif de compression selon l'invention,
[Fig. 2] représente une vue en coupe, schématique et partielle, du dispositif de compression dans une première configuration de fonctionnement,
[Fig. 3] représente le dispositif de compression dans une seconde configuration de fonctionnement,
[Fig. 4] représente le dispositif de compression dans une troisième configuration de fonctionnement,
[Fig. 5] représente le dispositif de compression dans une quatrième configuration de fonctionnement,
[Fig. 6] représente une vue en coupe, schématique et partielle, illustrant un exemple de structure et fonctionnement d'un exemple de réalisation d'une installation de compression comprenant plusieurs dispositifs de compression selon l'invention,
[Fig. 7] représente une vue schématique et partielle illustrant un exemple de structure et fonctionnement d'un autre exemple de réalisation d'un dispositif de compression selon l'invention,
[Fig. 8] représente une vue schématique et partielle illustrant un exemple de structure et fonctionnement d'une autre installation comprenant un dispositif de compression selon l'invention,
[Fig. 9] représente une vue en coupe, schématique et partielle illustrant un premier exemple de réalisation d'une station de remplissage comprenant un dispositif de compression selon l'invention,
[Fig. 10] représente une vue en coupe, schématique et partielle d'un deuxième exemple de réalisation d'une station de remplissage comprenant un dispositif de compression selon l'invention.

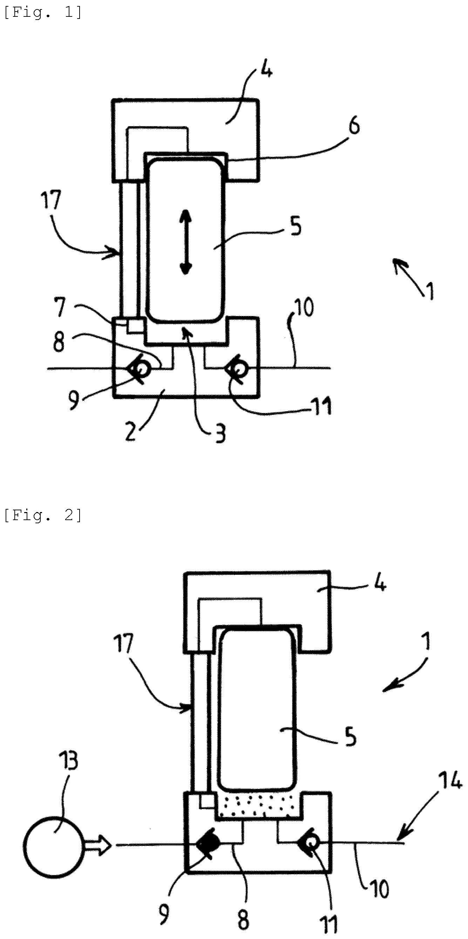

Le dispositif 1 de compression d'un fluide illustré à la [Fig. 1] comprend un bâti ou carter abritant une chambre de compression dans laquelle est logé un piston 5 mobile. Le dispositif 1 comprend une première extrémité 2 abritant une première extrémité 3 de la chambre de compression, le dispositif 1 comprenant une seconde extrémité 4 abritant une seconde extrémité 6 de la chambre de compression.

Le piston 5 est mobile en translation entre les première 3 et seconde 6 extrémités de la chambre de compression (via tout système d'entraînement approprié et non décrit par soucis de simplification).

Le dispositif 1 comprend une conduite 7 de régénération reliant les première 3 et seconde 6 extrémités de la chambre de compression et comportant un régénérateur 17.

Le dispositif 1 comprend en outre une conduite 8 d'alimentation ayant une extrémité amont destinée à être reliée à une source 13 de fluide à comprimer et une extrémité aval débouchant dans la première extrémité 3 de la chambre de compression. La conduite 8 d'alimentation comprend un ensemble de clapet(s) ou vanne(s), notamment un clapet 9 anti-retour. Le dispositif 1 comprend une conduite 10 d'évacuation du fluide comprimé comprenant une extrémité amont reliée à la chambre de compression et une extrémité aval destinée à être reliée à un récepteur du fluide comprimé. Cette conduite 10 d'évacuation comprend également un ensemble de clapet (s) ou vanne (s), par exemple un clapet 11 anti-retour. La conduite 7 de régénération est distincte de la conduite 10 d'évacuation. C'est-à-dire que cette conduite 7 de régénération relie les deux extrémités 3, 6 de la chambre de compression en passant par le régénérateur et ne permet ainsi que le transit direct entre ces extrémités lors des moments du piston 5.

L'extrémité amont de la conduite 8 d'alimentation est reliée directement à la première extrémité 3 de la chambre de compression, c'est-à-dire sans passer par une chambre de pré-compression dans la première extrémité 2 du dispositif. C'est-à-dire que, contrairement à la structure décrite dans le document FR2904401A1, le bâti du dispositif 1 de compression ne comprend pas de chambre de pré-compression en amont de la première extrémité 3 de la chambre de compression. Le fluide à comprimer est injecté directement dans la chambre 3 de compression. Ceci permet de s'affranchir des contraintes techniques nécessaires dans l'art antérieur (actionnement d'un piston supplémentaire et étanchéité notamment). De plus, la suppression de cette pré-compression augmente la fiabilité du dispositif sans nuire à ses performances.

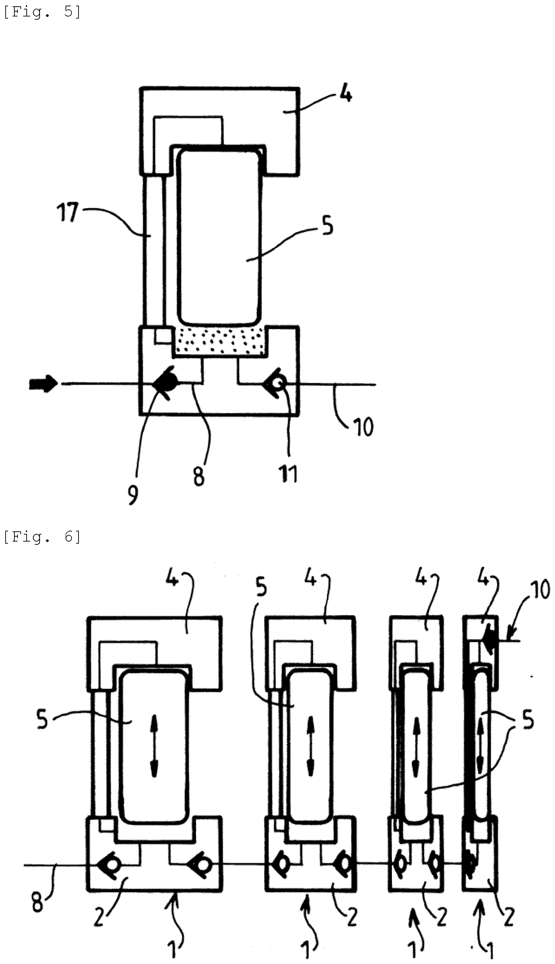

Comme illustré, de préférence, l'extrémité amont de la conduite 10 d'évacuation du fluide comprimé est reliée à la première extrémité 3 de la chambre de compression. C'est-à-dire que le fluide comprimé est évacué à partir de l'extrémité 3 relativement froide du dispositif 1. Ceci permet de produire du fluide comprimé relativement froid. Ceci permet par exemple de disposer plusieurs dispositifs 1 de compression en série comme illustré à la [Fig. 6]. Ainsi l'extrémité aval de la conduite 10 d'évacuation d'un dispositif 1 de compression peut être raccordée à l'extrémité amont de la conduite 8 d'alimentation d'un dispositif 1 de compression suivant.

Pour un gaz parfait, le taux de compression maximal possible est le rapport de température entre la chambre chaude (seconde extrémité 6 de la chambre de compression) et la chambre froide (première extrémité 3 de la chambre de compression). Ainsi, la seconde extrémité 4 du dispositif 1 peut comprendre un système 12 de réchauffage du fluide.

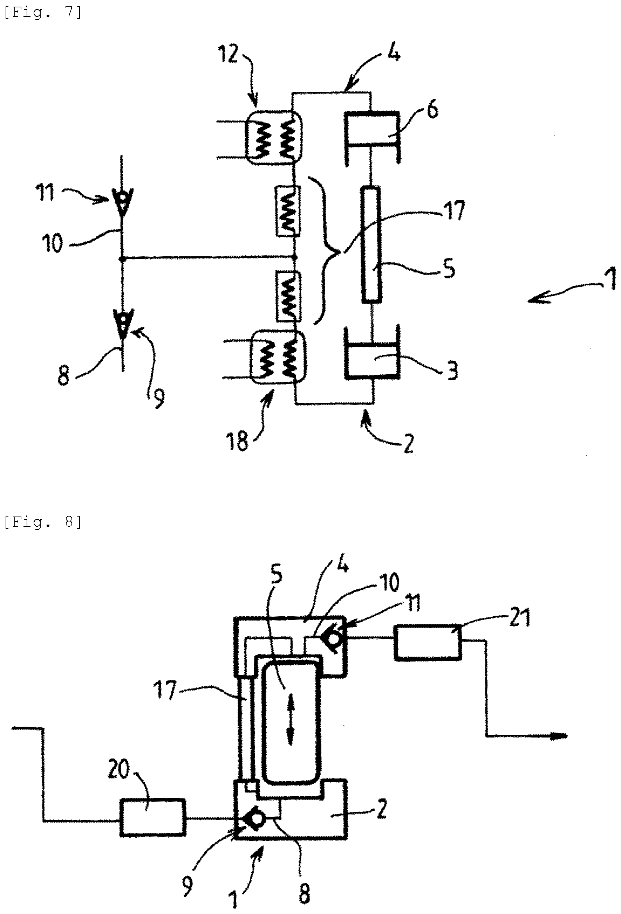

Par exemple, la température du fluide dans la seconde extrémité 6 de la chambre de compression peut être comprise entre 200 et 1000 K et peut typiquement atteindre 500K via par exemple un réchauffage, par exemple électrique (cf. l'exemple de la [Fig. 7] où l'échangeur 12 de chaleur peut être à une température de 500K. Il est à noter qu'un taux de compression plus élevé peut être obtenu en tirant parti de la transition de phase ou en empruntant des voies thermodynamiques précises dans la phase supercritique.

Ainsi, une seule étape de compression peut difficilement dépasser un taux de compression de dix pour toutes les questions pratiques (à moins que l'entrée ne reçoive du liquide, alors le taux de compression peut atteindre plusieurs centaines ou mille ou plus).

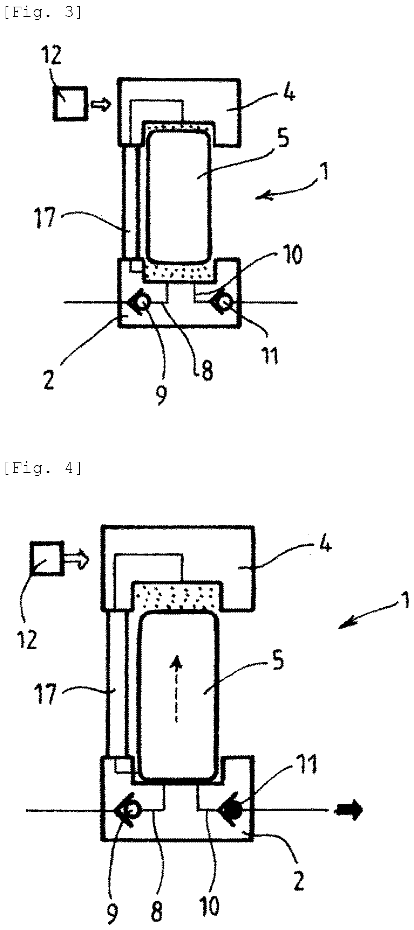

L'utilisation de dispositifs 1 de compression en série est alors avantageuse. Pour une meilleure efficacité, il est préférable de faire varier le débit volumique afin de conserver le débit massique; c'est-à-dire, à chaque étage de la série, de réduire le volume des chambres 3, 6 et de gérer la fréquence de déplacement du piston 5 pour assurer un débit de gaz optimal. De plus, le dernier étage de compression peut évacuer si besoin dans la chambre « chaude » (au niveau de la seconde extrémité 4 du dispositif comme illustré à la [Fig. 4]).

Classiquement, le régénérateur 17 peut comprendre un tube échangeur de chaleur, notamment un tube cylindrique, rempli d'un matériau configuré pour emmagasiner et restituer la chaleur et laisser passer le fluide à l'état liquide et/ou gazeux. Bien entendu, tout autre structure appropriée d'échangeur de chaleur peut être envisagée, par exemple_le régénérateur 17 pourrait entourer au moins partiellement le piston (comme deux cylindres concentriques) et/ou le régénérateur 17 pourrait comprendre une série de tubes dont le matériau est l'élément régénératif et/ou un échangeur à ailettes découpées dans la masse.

En se référant à la [Fig. 2], dans une première étape, le piston 5 est en position extrême dans la seconde extrémité 6 de la chambre de compression (côté relativement chaud du dispositif 1). Le clapet 9 de la conduite 8 d'alimentation est ouvert, du fluide (gaz ou liquide) est introduit et remplit le volume de la première extrémité 3 de la chambre de compression (à partir d'une source 13).

Ensuite ([Fig. 3], le piston 5 est actionné vers la première extrémité 3 de la chambre de compression. Ceci entraîne un transfert de fluide de la première extrémité 3 (froide) vers la seconde extrémité 6 (chaude). A noter qu'aucune force nette n'est nécessaire car le volume total du système reste inchangé. En pratique, la force nécessaire n'est limitée que par l'impédance de transfert du gaz à travers le régénérateur 17. Lorsque le gaz se réchauffe dans la seconde extrémité 6 chaude, la pression commence à augmenter dans le système.

Le clapet 9 de la conduite 8 d'alimentation est fermé et le clapet 11 de la conduite 10 d'évacuation reste fermé tant que la pression dans la première extrémité 3 de la chambre de compression est inférieure à un seuil d'ouverture (par exemple la pression d'un réservoir de sortie relié à la conduite 10 d'évacuation). De préférence, le volume mort de la tuyauterie et du régénérateur 17 doivent être limités autant que possible pour minimiser la masse de transfert nécessaire pour ouvrir le clapet 11 de la conduite 10 d'évacuation (typiquement inférieur à 10% de la valeur du volume des chambres de compression).

Lorsque le piston 5 arrive à sa position extrême au fond de la première extrémité 3 de la chambre de compression ([Fig. 4]), il occupe de préférence tout ce volume d'extrémité de la chambre de compression.

La masse de fluide excédentaire est alors expulsée par le clapet 11 de la conduite 10 d'évacuation à une pression de préférence constante.

Il peut être essentiel de maintenir le volume mort dans la première extrémité 3 de la chambre de compression au minimum dans le cas où le gaz se re-condense dû à l'augmentation de pression si l'on veut conserver un ratio optimal entre le débit comprimé sortant et le débit du régénérateur. Toutefois, cet effet ne devrait pas empêcher le dispositif 1 de compression de fonctionner à long terme. Le point médian du gradient de température dans le régénérateur 17 se déplace alors plus loin vers le côté chaud (vers la seconde extrémité 4). Ensuite ([Fig. 4]), le piston 5 est déplacé à nouveau vers la seconde extrémité 6 de la chambre de compression. Ceci déplace le fluide de la seconde extrémité 6 (chaude) vers la première extrémité 3 (froide) de la chambre de compression. Pendant ce processus, le flux de masse se déplace de la seconde extrémité 6 (chaude) vers la première extrémité 3 (froide). Par conséquent, aucune puissance de refroidissement n'est nécessaire (grâce au régénérateur 17). A des fins d'ingénierie, une certaine puissance de refroidissement peut être nécessaire pour compenser la charge statique due au rayonnement thermique et à la conduction des supports et du régénérateur 17.

Lorsque le fluide se refroidit, la pression dans le dispositif 1 de compression commence à baisser.

Lorsque la pression dans la première extrémité 3 de la chambre de compression devient inférieure à un seuil, le clapet 11 de la conduite 10 d'évacuation se ferme et le clapet 9 de la conduite 8 d'alimentation peut à nouveau s'ouvrir pour recommencer le processus cf. [Fig. 5].

Le dispositif 1 de compression peut être alimenté en gaz ou en liquide. Dans ce dernier cas des performances de compression plus grandes sont obtenues.

Le dispositif 1 de compression peut être utilisé pour comprimer de l'hydrogène jusqu'à 900 bar ou plus à partir d'un réservoir de liquide avec un débit massique de 10 à 100 g/s par exemple. La fréquence de déplacement du piston 5 doit être aussi élevée que possible car elle conduit à un compresseur plus petit.

En supposant une masse volumique d'hydrogène gazeux à 21,5K de 1,225kg/m³, cela signifie que 61,25g de gaz peuvent être logés dans le volume de la première extrémité 3 de la chambre de compression. A une fréquence de 2Hz, il faudrait une efficacité massique de compression inférieure à 1/3 pour atteindre l'objectif de 50g/s. Le débit massique total sera de 122,5 g/s avec un débit massique du compresseur de 50 g/s seulement (en supposant des pertes d'efficacité de compression massique plus importantes en raison du volume mort dans le régénérateur). Dans la représentation schématique de la [Fig. 7], le régénérateur 17 a été symbolisé par deux échangeurs de chaleurs disposés respectivement dans les deux extrémités du dispositif 1. C'est-à-dire que les deux parties relativement chaude et froides peuvent être séparées physiquement au lieu d'être formées dans un même organe échangeur continu.

De même, les entrées et sortie de fluide sont raccordées en parallèle à une même conduite (la conduite 8 d'alimentation et la conduite 10 d'évacuation sont raccordées à une même branche reliée à la partie centrale de la conduite 7 de régénération, entre les deux parties d'échange de chaleur du régénérateur 17). Comme illustré, chaque extrémité de la conduite 7 de régénération peut comporter également un échangeur 18, 12 de chaleur pour réchauffer ou maintenir la température du fluide avant respectivement chacune des première 3 et seconde extrémités de la chambre de compression. Par exemple les échangeurs 18, 12 peuvent être intégrés directement dans respectivement les première 2 et seconde 4 extrémités du dispositif. L'échange de chaleur peut être réalisé entre le fluide à comprimer et un fluide caloporteur qui circule dans l'échangeur.

Ces échangeurs 18, 12 de chaleur peuvent être prévus pour maintenir une température de fonctionnement stable du fluide dans chacune des extrémités de la chambre de compression. Il n'est pas forcément nécessaire de prévoir un interrupteur de chauffage.

Le cycle de fonctionnement du dispositif de compression peut être presque continu.

Bien entendu, d'autres modes de réalisation sont possibles. Ainsi, par exemple, le fluide à comprimer peut être injecté dans le dispositif 1 de compression à sa température froide (liquide) et sa chaleur latente de vaporisation au cours du processus de compression peut être utilisée comme source de froid.

De même, il également possible de séparer le fluide froid entrant et chaud sortant du dispositif 1 de la [Fig. 7] en prévoyant deux conduites distinctes et en différenciant les points de raccordement aux échangeurs de chaleur formant le régénérateur 17. Ainsi, le point de raccordement au régénérateur 17 peut aussi être déplacé : entre les deux échangeurs, en haut ou en bas sur la représentation. Il peut aussi y avoir deux points de raccordement séparés pour le fluide relativement chaud (en haut) et le fluide relativement froid (en bas).

Dans le mode de réalisation de la [Fig. 8], le fluide à comprimer qui alimente la conduite 8 d'alimentation peut être pré-refroidi dans un échangeur 20 de chaleur. Par exemple du fluide à une température de 300K et à une pression entre 10 et 80bar peut être amené à 200K dans cet échangeur 20. La conduite 10 d'évacuation peut être située au niveau de la seconde extrémité 4 du dispositif (côté relativement plus chaud). En sortie du dispositif 1, le fluide comprimé peut être mis en échange thermique avec un échangeur 21 de chaleur à 300K pour fournir en aval du fluide ayant par exemple une température de 300K et une pression de 20 à 186 bar par exemple.

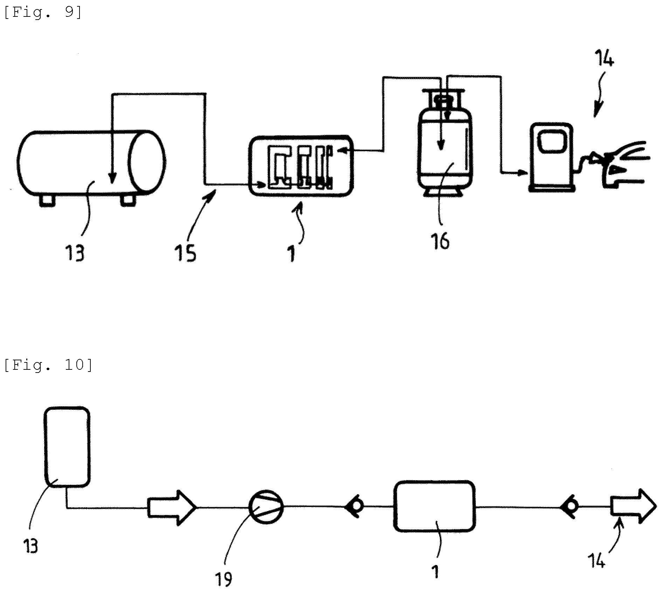

La [Fig. 9] décrit un exemple d'utilisation d'un dispositif de compression 1 (plusieurs dispositifs 1 en série de préférence) dans une station de remplissage de réservoirs d'hydrogène. La source 13 peut être un réservoir de stockage de gaz liquéfié classique. Le circuit 15 de transfert est par exemple une ligne isolée thermiquement sous vide. Le dispositif 1 de compression (ou les dispositifs de compression disposés en série notamment deux, trois, quatre, cinq, six ou sept étages de compression par exemple) peut être disposé dans un carter isolé sous vide également (isolation sous vide et multicouche). L'installation peut comprendre classiquement également un ou des moteurs actionnant le(s) pistons 5, l'électronique de commande, et des radiateurs à ventilation de classe de 50 à 500 kW à température ambiante pour augmenter l'échange de chaleur, ces puissances étant les puissances de chaleur à échanger. Par exemple pour une station hydrogène débitant 2.5 t/jour de fluide, il faudrait un ventilateur de classe de 150 kW.

Le dispositif de compression peut produire de l'hydrogène gazeux à une pression de 900 bar par exemple vers un ou plusieurs stockage 16 tampon. Ce réservoir 16 tampon peut quant à lui alimenter la ou les extrémités terminales de la station.

Dans le mode de réalisation de la [Fig. 10], le circuit 15 de transfert comprend une pompe 19 disposée entre la source 13 de gaz liquéfié et le dispositif 1 de compression. A l'admission, la pompe 19 peut recevoir par exemple de l'hydrogène à une pression de quelques bars, par exemple 6 bar et une température de 30Kenviron (par exemple 27K). En sortie de la pompe 19, le fluide peut avoir une température de l'ordre de 60K, par exemple 58K et une pression de 300 à 400 bar ou plus. En sortie du dispositif 1 de compression le fluide peut avoir une pression comprise entre 800 et 1000bar, par exemple 950bar, une température de 300K et un débit de 45kg/heure. Des clapets anti-retour peuvent être prévus respectivement entre la pompe 19 et le dispositif 1 de compression et à la sortie du dispositif 1 de compression.

## Revendications

1. Dispositif de compression d'un fluide comportant une chambre de compression comprenant un piston (5) mobile, le dispositif comprenant une première extrémité (2) abritant une première extrémité (3) de la chambre de compression, le dispositif (1) comprenant une seconde extrémité (4) abritant une seconde extrémité (6) de la chambre de compression, le piston (5) étant mobile en translation entre les première (3) et seconde (6) extrémités de la chambre de compression, le dispositif (1) comprenant une conduite (7) de régénération reliant les première (3) et seconde (6) extrémités de la chambre de compression et comportant un régénérateur (17), le dispositif (1) comprenant une conduite (8) d'alimentation comprenant une extrémité amont destinée à être reliée à une source de fluide à comprimer et une extrémité aval débouchant dans la première extrémité (3) de la chambre de compression, la conduite (8) d'alimentation comprenant un ensemble de clapet(s) (9), le dispositif (1) comprenant une conduite (10) d'évacuation du fluide comprimé comprenant une extrémité amont reliée à la chambre de compression et une extrémité aval destinée à être reliée à un récepteur du fluide comprimé, la conduite (10) d'évacuation comprenant un ensemble de clapet(s) (11), **caractérisé en ce que** l'extrémité aval de la conduite (8) d'alimentation est reliée directement à la première extrémité (3) de la chambre de compression, c'est-à-dire sans passer par une chambre de pré-compression dans la première extrémité (2) du dispositif et **en ce que** la conduite (7) de régénération est distincte de la conduite (10) d'évacuation.

2. Dispositif selon la revendication 1, **caractérisé en ce que** l'extrémité amont de la conduite (10) d'évacuation du fluide comprimé est reliée à la première extrémité (3) de la chambre de compression.

3. Dispositif selon la revendication 1 ou 2, **caractérisé en ce que** l'ensemble de clapet(s) de la conduite (8) d'alimentation comprend un organe (9) anti-retour tel qu'un clapet anti-retour.

4. Dispositif selon l'une quelconque des revendications 1 à 3, **caractérisé en ce que** l'ensemble de clapet(s) de la conduite (10) d'évacuation comprend un organe (11) anti-retour tel qu'un clapet anti-retour.

5. Dispositif selon l'une quelconque des revendications 1 à 4, **caractérisé en ce que** la seconde extrémité (4) du dispositif (1) comprend un système (12) de réchauffage.

6. Dispositif selon l'une quelconque des revendications 1 à 5, **caractérisé en ce que** la première extrémité (2) du dispositif (1) comprend un système (18) de refroidissement ou de réchauffage.

7. Dispositif selon l'une quelconque des revendications 1 à 6, **caractérisé en ce que** le régénérateur (17) comprend un tube échangeur de chaleur, notamment un tube cylindrique, rempli d'un matériau configuré pour emmagasiner et restituer la chaleur et laisser passer le fluide à l'état liquide et/ou gazeux.

8. Installation de compression comprenant plusieurs dispositifs de compression conformes à l'une quelconque des revendications 1 à 7 disposés en série.

9. Station de remplissage de réservoir de gaz sous pression comprenant une source (13) de gaz liquéfié, un circuit (15) de transfert de fluide depuis la source (13) vers une extrémité (14) de distribution, le circuit (15) de transfert comprenant un dispositif (1) de compression conforme à l'une quelconque des revendications 1 à 7 ou une installation de compression conforme à la revendication 8.

10. Station selon la revendication 9, **caractérisée en ce que** le circuit (15) de transfert comprend au moins un stockage (16) de gaz sous pression comprimé par le dispositif de compression, ledit stockage étant disposé entre le dispositif (1) de compression et l'extrémité (14) de distribution.

11. Station selon la revendication 10, **caractérisée en ce que** le circuit (15) de transfert comprend une pompe (19) disposée entre la source (13) de gaz liquéfié et le dispositif (1) de compression.

12. Procédé de compression de fluide au moyen d'un dispositif conforme à l'une quelconque des revendications 1 à 7 ou d'une installation selon la revendication 8, **caractérisé en ce qu'**il comprend les étapes successives suivantes : a) admission d'un fluide à l'état liquide ou gazeux à une pression initiale dans la première extrémité (3) de la chambre de compression via la conduite (8) d'alimentation, b) déplacement du piston (5) vers la première extrémité (3) de la chambre de compression et transfert du fluide de la première extrémité (3) de la chambre de compression vers la seconde extrémité (6) de la chambre de compression via la conduite (7) de régénération, la seconde extrémité (4) du dispositif (1) étant maintenue à une température supérieure à la température de la première extrémité (2), c) déplacement du piston (5) vers la seconde extrémité (6) de la chambre de compression et transfert du fluide de la seconde extrémité (6) de la chambre de compression vers la première extrémité (3) de la chambre de compression et l'extrémité aval de la conduite (10) d'évacuation.

13. Procédé selon la revendication 12, **caractérisé en ce que** le fluide est comprimé à un débit de 10 à 100 grammes par seconde, notamment 50 grammes par seconde.

## Patentansprüche

1. Vorrichtung zur Kompression eines Fluids, welche eine Kompressionskammer aufweist, die einen beweglichen Kolben (5) umfasst, wobei die Vorrichtung ein erstes Ende (2) umfasst, das ein erstes Ende (3) der Kompressionskammer aufnimmt, wobei die Vorrichtung (1) ein zweites Ende (4) umfasst, das ein zweites Ende (6) der Kompressionskammer aufnimmt, wobei der Kolben (5) zwischen dem ersten (3) und dem zweiten (6) Ende der Kompressionskammer translatorisch beweglich ist, wobei die Vorrichtung (1) eine Regenerationsleitung (7) umfasst, die das erste (3) und zweite (6) Ende der Kompressionskammer verbindet und einen Regenerator (17) aufweist, wobei die Vorrichtung (1) eine Zuführungsleitung (8) umfasst, die ein stromaufwärtiges Ende, das dazu bestimmt ist, mit einer Quelle von zu komprimierendem Fluid verbunden zu werden, und ein stromabwärtiges Ende, das in das erste Ende (3) der Kompressionskammer mündet, umfasst, wobei die Zuführungsleitung (8) eine Ventilanordnung (9) umfasst, wobei die Vorrichtung (1) eine Abflussleitung (10) für das komprimierte Fluid umfasst, die ein stromaufwärtiges Ende, das mit der Kompressionskammer verbunden ist, und ein stromabwärtiges Ende, das dazu bestimmt ist, mit einem Aufnehmer für das komprimierte Fluid verbunden zu werden, umfasst, wobei die Abflussleitung (10) eine Ventilanordnung (11) umfasst, **dadurch gekennzeichnet, dass** das stromabwärtige Ende der Zuführungsleitung (8) direkt mit dem ersten Ende (3) der Kompressionskammer verbunden ist, das heißt ohne über eine Vorkompressionskammer im ersten Ende (2) der Vorrichtung zu verlaufen, und dadurch, dass die Regenerationsleitung (7) von der Abflussleitung (10) verschieden ist.

2. Vorrichtung nach Anspruch 1, **dadurch gekennzeichnet, dass** das stromaufwärtige Ende der Abflussleitung (10) für das komprimierte Fluid mit dem ersten Ende (3) der Kompressionskammer verbunden ist.

3. Vorrichtung nach Anspruch 1 oder 2, **dadurch gekennzeichnet, dass** die Ventilanordnung der Zuführungsleitung (8) ein Rückströmsperrorgan (9) umfasst, wie etwa ein Rückschlagventil.

4. Vorrichtung nach einem der Ansprüche 1 bis 3, **dadurch gekennzeichnet, dass** die Ventilanordnung der Abflussleitung (10) ein Rückströmsperrorgan (11) umfasst, wie etwa ein Rückschlagventil.

5. Vorrichtung nach einem der Ansprüche 1 bis 4, **dadurch gekennzeichnet, dass** das zweite Ende (4) der Vorrichtung (1) ein Heizsystem (12) umfasst.

6. Vorrichtung nach einem der Ansprüche 1 bis 5, **dadurch gekennzeichnet, dass** das erste Ende (2) der Vorrichtung (1) ein Kühl- oder Heizsystem (18) umfasst.

7. Vorrichtung nach einem der Ansprüche 1 bis 6, **dadurch gekennzeichnet, dass** der Regenerator (17) ein Wärmetauscherrohr umfasst, insbesondere ein zylindrisches Rohr, das mit einem Material gefüllt ist, das dafür ausgelegt ist, die Wärme zu speichern und wieder abzugeben und das Fluid im flüssigen und/oder gasförmigen Zustand durchströmen zu lassen.

8. Kompressionsanlage, welche mehrere Kompressionsvorrichtungen gemäß einem der Ansprüche 1 bis 7 umfasst, die in Reihe angeordnet sind.

9. Füllstation für Druckgasbehälter, welche eine Quelle (13) von Flüssiggas und einen Kreislauf (15) zum Transport von Fluid von der Quelle (13) zu einem Verteilungsende (14) umfasst, wobei der Transportkreislauf (15) eine Kompressionsvorrichtung (1) gemäß einem der Ansprüche 1 bis 7 oder eine Kompressionsanlage gemäß Anspruch 8 umfasst.

10. Station nach Anspruch 9, **dadurch gekennzeichnet, dass** der Transportkreislauf (15) mindestens einen Speicher (16) für Druckgas umfasst, das von der Kompressionsvorrichtung komprimiert wurde, wobei der Speicher zwischen der Kompressionsvorrichtung (1) und dem Verteilungsende (14) angeordnet ist.

11. Station nach Anspruch 10, **dadurch gekennzeichnet, dass** der Transportkreislauf (15) eine Pumpe (19) umfasst, die zwischen der Quelle (13) von Flüssiggas und der Kompressionsvorrichtung (1) angeordnet ist.

12. Verfahren zur Kompression von Fluid mittels einer Vorrichtung gemäß einem der Ansprüche 1 bis 7 oder einer Anlage nach Anspruch 8, **dadurch gekennzeichnet, dass** es die folgenden aufeinander folgenden Schritte umfasst: a) Einlassen eines Fluids im flüssigen oder gasförmigen Zustand mit einem Anfangsdruck in das erste Ende (3) der Kompressionskammer über die Zuführungsleitung (8), b) Bewegung des Kolbens (5) zum ersten Ende (3) der Kompressionskammer hin und Transport des Fluids vom ersten Ende (3) der Kompressionskammer zum zweiten Ende (6) der Kompressionskammer hin über die Regenerationsleitung (7), wobei das zweite Ende (4) der Vorrichtung (1) auf einer Temperatur gehalten wird, die höher als die Temperatur des ersten Endes (2) ist, c) Bewegung des Kolbens (5) zum zweiten Ende (6) der Kompressionskammer hin und Transport des Fluids vom zweiten Ende (6) der Kompressionskammer zum ersten Ende (3) der Kompressionskammer und stromabwärtigen Ende der Abflussleitung (10) hin.

13. Verfahren nach Anspruch 12, **dadurch gekennzeichnet, dass** das Fluid mit einem Durchsatz von 10 bis 100 Gramm pro Sekunde, insbesondere von 50 Gramm pro Sekunde komprimiert wird.

## Claims

1. Fluid compression device having a compression chamber comprising a mobile piston (5), the device comprising a first end (2) accommodating a first end (3) of the compression chamber, the device (1) comprising a second end (4) accommodating a second end (6) of the compression chamber, the piston (5) being able to move in translation between the first (3) and second (6) ends of the compression chamber, the device (1) comprising a regeneration pipe (7) connecting the first (3) and second (6) ends of the compression chamber and having a regenerator (17), the device (1) comprising a supply pipe (8) comprising an upstream end intended to be connected to a source of fluid to be compressed and a downstream end opening into the first end (3) of the compression chamber, the supply pipe (8) comprising a set of one or more valves (9), the device (1) comprising a compressed fluid discharge pipe (10) comprising an upstream end connected to the compression chamber and a downstream end intended to be connected to a receiver of the compressed fluid, the discharge pipe (10) comprising a set of one or more valves (11), **characterized in that** the downstream end of the supply pipe (8) is connected directly to the first end (3) of the compression chamber, i.e. without passing through a pre-compression chamber in the first end (2) of the device and **in that** the regeneration pipe (7) is separate from the discharge pipe (10).

2. Device according to Claim 1, **characterized in that** the upstream end of the compressed fluid discharge pipe (10) is connected to the first end (3) of the compression chamber.

3. Device according to Claim 1 or 2, **characterized in that** the set of one or more valves of the supply pipe (8) comprises a non-return member (9) such as a non-return valve.

4. Device according to any one of Claims 1 to 3, **characterized in that** the set of one or more valves of the discharge pipe (10) comprises a non-return member (11) such as a non-return valve.

5. Device according to any one of Claims 1 to 4, **characterized in that** the second end (4) of the device (1) comprises a heating system (12).

6. Device according to any one of Claims 1 to 5, **characterized in that** the first end (2) of the device (1) comprises a cooling or heating system (18).

7. Device according to any one of Claims 1 to 6, **characterized in that** the regenerator (17) comprises a heat exchanger tube, in particular a cylindrical tube, filled with a material configured to store and release the heat and to allow the fluid in the liquid and/or gaseous state to pass.

8. Compression installation comprising a plurality of compression devices in accordance with any one of Claims 1 to 7, disposed in series.

9. Pressurized gas tank filling station comprising a source (13) of liquefied gas, a circuit (15) for transferring fluid from the source (13) toward a distribution end (14), the transfer circuit (15) comprising a compression device (1) in accordance with any one of Claims 1 to 7 or a compression installation in accordance with Claim 8.

10. Station according to Claim 9, **characterized in that** the transfer circuit (15) comprises at least one store (16) of pressurized gas compressed by the compression device, said store being disposed between the compression device (1) and the distribution end (14).

11. Station according to Claim 10, **characterized in that** the transfer circuit (15) comprises a pump (19) disposed between the source (13) of liquefied gas and the compression device (1).

12. Method for compressing fluid by means of a device in accordance with any one of Claims 1 to 7 or of an installation according to Claim 8, **characterized in that** it comprises the following successive steps: a) admission of a fluid in the liquid or gaseous state at an initial pressure into the first end (3) of the compression chamber via the supply pipe (8), b) movement of the piston (5) toward the first end (3) of the compression chamber and transfer of the fluid from the first end (3) of the compression chamber toward the second end (6) of the compression chamber via the regeneration pipe (7), the second end (4) of the device (1) being kept at a temperature higher than the temperature of the first end (2), c) movement of the piston (5) toward the second end (6) of the compression chamber and transfer of the fluid from the second end (6) of the compression chamber toward the first end (3) of the compression chamber and the downstream end of the discharge pipe (10).

13. Method according to Claim 12, **characterized in that** the fluid is compressed at a flow rate of 10 to 100 grams per second, in particular 50 grams per second.
